# EUROPEAN PATENT APPLICATION

(11) **EP 4 207 430 A1**
(43) Date of publication of application: **05.07.2023**
(21) Application number: 21908903.4
(22) Date of filing: 09.11.2021
(51) Int. Cl.: H01M 10/42, H01M 10/44

(54) **METHOD FOR RECOVERING ACTIVITY OF LITHIUM ION BATTERY, AND LITHIUM ION BATTERY**

(30) Priority: 24.12.2020 CN 202011554421
(71) Applicant: Contemporary Amperex Technology Co., Limited, Fujian PRC 352100 (CN)
(72) Inventor: XIE, Haotian, Ningde, Fujian 352100 (CN); CHEN, Xingbu, Ningde, Fujian 352100 (CN); SUN, Xin, Ningde, Fujian 352100 (CN); WANG, Bangrun, Ningde, Fujian 352100 (CN); CHEN, Xiao, Ningde, Fujian 352100 (CN); LIU, Na, Ningde, Fujian 352100 (CN); LIANG, Chengdu, Ningde, Fujian 352100 (CN)
(74) Representative: Gong, Jinping
(86) International application number: PCT/CN2021/129654
(87) International publication number: WO 2022/134903

(57) **Abstract**

The present application provides a method for recovering activity of a lithium ion battery, a lithium ion battery, a charging apparatus, a battery management system, a vehicle, and a related readable storage medium, and belongs to the field of batteries. The method includes performing activity recovery by applying an activation voltage based on a battery state-of-health value of the lithium ion battery. By means of the method, while a high energy density is ensured, effects of lowering costs, simplifying preparing processes, increasing an initial coulombic efficiency of the battery, having no capacity decrease, etc. during use are achieved, and the service life of the battery is prolonged.

## Description

### Cross-Reference to Related Applications

The present application claims priority to Chinese patent application no. 2020115544210, entitled "METHOD FOR RECOVERING ACTIVITY OF LITHIUM ION BATTERY, AND LITHIUM ION BATTERY" and filed on December 24, 2020, the entire content of which is incorporated herein by reference.

### Technical Field

The present application relates to the field of batteries, more specifically to a method for recovering activity of a lithium ion battery, and a lithium ion battery using the method, and further to a battery module including or using a lithium ion battery, a control circuit, a battery management system, a vehicle, and a related readable storage medium.

### Background Art

lithium ion batteries are widely applied in consumer electronic products due to advantages such as a high energy density, a long cycling life, and having no memory effect. In recent years, with the continuous development of electric vehicles and energy storage systems, the market imposes increasingly higher requirements on various performances of batteries. For example, during a first charging process of a battery, components in an electrolyte solution are reduced and decomposed on a surface of a negative electrode material, to form a solid electrolyte interphase (SEI) film, which mainly include components such as lithium carbonate, lithium fluoride, and alkyl lithium carbonate. In the process, part of lithium ions de-intercalated from a positive electrode material is consumed, resulting in a loss of active lithium and a decrease in initial coulombic efficiency. When high-capacity alloyed negative electrode (silicon, germanium, and tin), transition metal oxides, and other materials are used, the consumption of active lithium caused by the above factors further degrade the battery.

Therefore, there is an urgent desire to develop a new technique to conveniently supplement and recover, at a low cost, lithium ions lost from and decreased battery activity of a lithium ion battery during the first charging process and subsequent charge/discharge processes, so that the initial coulombic efficiency of the lithium ion battery is significantly improved and the effective service life is significantly prolonged. During the effective service life, various performances of the battery, such as an energy density, and a charge/discharge performance, can be effectively maintained or recovered, without significant degradation.

### Summary of the Invention

As described above, in the present application, a technique for recovering activity of a battery, particularly a lithium ion battery, is developed, whereby process parameters of the battery during first charging and use of the battery are finely designed, such that the performance of the battery after the first charging and the overall effective service life are significantly improved.

A first aspect of the present application provides a method for recovering activity of a battery such as a lithium ion battery, the method including: obtaining a battery state-of-health value of a battery during a charging process; when the battery state-of-health value is less than or equal to a preset threshold, applying an activation voltage to the battery, such that lithium ions at a lithium supplement agent comprised in the battery are released to an electrolyte solution, where the activation voltage is higher than a normal charging voltage of the battery; and when the battery state-of-health value increases to be greater than or equal to a second preset threshold, recovering from the activation voltage to the normal charging voltage.

According to an implementation of the first aspect of the present application, the lithium supplement agent is included in a positive electrode of the battery.

According to another implementation of the first aspect of the present application, the battery state-of-health value is selected from at least one of the following parameters: a battery capacity, a remaining capacity, an energy density, a power density, an electromotive force, an open-circuit voltage, an operating voltage, an end-of-discharge voltage, and an operating current.

According to another implementation of the first aspect of the present application, the battery state-of-health value is a real-time capacity Cᵣₑₐₗ₋ₜᵢₘₑ of the battery, an initial capacity of the battery in a first charge-discharge cycle is C₀, and the threshold is C₀ × 80%, where when Cᵣₑₐₗ₋ₜᵢₘₑ decreases to be lower than or equal to C₀ × 80%, the activation voltage is applied to the battery; after the first charge-discharge cycle, an operation of applying the activation voltage is not performed, and subsequent second to Nth charge-discharge operations are performed directly, where N is an integer from 2 to 500,000, and the second to Nth charge-discharge operations are performed at the normal charging voltage; during the second to Nth charge-discharge operations, the real-time capacity Cᵣₑₐₗ₋ₜᵢₘₑ of the battery gradually decreases, and each time Cᵣₑₐₗ₋ₜᵢₘₑ is lower than C₀ × 80%, the activation voltage V_{activation} is applied to the battery for activity recovery; and when the battery state-of-health value increases to be greater than or equal to the second preset threshold, the activation voltage is recovered to the normal charging voltage, and the charge-discharge operations are continued.

According to another implementation of the first aspect of the present application, the operation of applying the activation voltage V_{activation} to the battery for activity recovery is performed more than once, and starting from the second time, the activation voltage for each activity recovery is increased relative to the activation voltage for a previous activity recovery, where the activation voltage is increased at a fixed extent each time or at a varying extent each time.

According to another implementation of the first aspect of the present application, the operation of applying the activation voltage V_{activation} to the battery for activity recovery is performed more than once, and starting from the second time, the activation voltage for each activity recovery is increased ≥0.1 volts relative to the activation voltage for a previous activity recovery.

According to another implementation of the first aspect of the present application, the operations of applying the normal charging voltage and the activation voltage are performed using a same charging device.

A second aspect of the present application provides a lithium ion secondary battery, the lithium ion secondary battery including a lithium supplement agent, where the lithium ion secondary battery performs a charge-discharge operation at a normal charging voltage, and the lithium supplement agent can perform activity recovery on the battery at an activation voltage, the activation voltage being higher than the normal charging voltage.

A third aspect of the present application provides a battery management system, the battery management system including:
a monitoring unit, a charging unit, and a control unit that are connected to each other,
where the monitoring unit is configured to monitor one or more state-of-health values of a lithium ion battery;
the charging unit can apply a normal charging voltage or an activation voltage to a battery, the normal charging voltage being lower than the activation voltage; and
the control unit generates a charging signal or an activation signal based on the state-of-health values measured by the monitoring unit, such that
the charging unit applies the normal charging voltage to the battery upon receiving the charging signal, and the charging unit applies the activation voltage to the battery upon receiving the activation signal.

A fourth aspect of the present application provides a readable storage medium for storing a computer program, where the computer program is used to perform the battery activation method of the present application. According to an implementation of the fourth aspect of the present application, the computer program is a battery management system program.

In the implementations of the present application, by means of optimized and refined process designing, the loss of the lithium ions and the degradation of battery performance of the lithium ion battery that occur during the first charging and subsequent charging/discharging in use are continuously compensated for and recovered using a simple and cheap technical means, which solves various problems that have been existing in the lithium ion secondary battery for a long time and are difficult to overcome in the prior art, such as a complex structure, a high cost, a severe loss of lithium ions, a coulombic efficiency being significantly lower than a theoretical value after the first charging, more side reactions, a short battery service life, and a rapid degradation of various performances of the battery.

### Brief Description of the Drawings

FIG. 1 is a flowchart according to an implementation of the present application;
FIG. 2 is a flowchart according to another implementation of the present application;
FIG. 3 is a schematic diagram of a battery management system according to an implementation of the present application;
FIG. 4 is a schematic diagram of an implementation of a secondary battery of the present application; and
FIG. 5 is an exploded view of the secondary battery shown in FIG. 4.

In the following section of Detailed Description of Embodiments, a method for recovering activity of a lithium ion battery and a related lithium ion battery that are designed in the present application, a charging apparatus for implementing the method, and design details of a battery module including the battery, a battery pack, and an electrical apparatus, are described.

### Detailed Description of Embodiments

"Ranges" disclosed herein are defined in the form of lower and upper limits, and a given range is defined by selection of a lower limit and an upper limit, the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be construed that the ranges of 60-110 and 80-120 are also contemplated. In addition, if minimum range values 1 and 2 are listed, and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed herein, and "0-5" is just an abbreviated representation of combinations of these numerical values. In addition, when a parameter is expressed as an integer ≥ 2, it is equivalent to disclosing that the parameter is, for example, an integer of 2, 3, 4, 5, 6, 7, 8, 9, 10, 11, 12, and so on.

In the present application, all the implementations and preferred implementations mentioned herein can be combined with one another to form new technical solutions, unless otherwise stated.

In the present application, all the technical features and preferred features mentioned herein can be combined with one another to form new technical solutions, unless otherwise stated.

In the present application, unless otherwise stated, all the steps mentioned herein can be performed sequentially or randomly, preferably sequentially. For example, the method including steps (a) and (b) indicates that the method may include steps (a) and (b) performed sequentially, and may also include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), etc.

In the present application, the terms "comprise" and "include" mentioned herein are open-ended or closed-ended, unless otherwise stated. For example, the terms "comprising" and "including" may mean that other components not listed may also be comprised or included, or only the listed components may be comprised or included.

In the description herein, it should be noted that, unless otherwise stated, "no less than" and "no more than" means the endpoints preceded by them being included, and "more" in the phrase "one or more" means two or more technical solutions.

In the description herein, unless otherwise stated, the term "and/or" is inclusive. For example, the phrase "A and/or B" means "A, B, or both A and B". More specifically, the condition "A and/or B" is satisfied by any one of the following: A is true (or present), and B is false (or not present); A is false (or not present), and B is true (or present); or both A and B are true (or present).

A battery activation method and a battery management system (BMS) that are developed by the present application are applicable to various types of secondary batteries (also known as rechargeable batteries), preferably to a lithium ion secondary battery.

### Secondary battery

According to an implementation of the present application, there is provided a lithium ion secondary battery, which includes a positive electrode, a negative electrode, a separator, an electrolyte, etc. During a charge/discharge process of the battery, active ions are intercalated and de-intercalated back and forth between a positive electrode plate and a negative electrode plate. The electrolyte is located between the positive electrode plate and the negative electrode plate and functions for conducting ions. In the present application, positive electrode materials in the secondary battery are specifically designed, and refined battery condition detection and reactivation operation processes are specifically designed during initial charging and subsequent charging/discharging, thereby implementing a lithium ion battery with a high energy density and a long service life, and with no capacity decrease.

### Positive electrode plate

In the secondary battery of the present application, the positive electrode plate includes a positive electrode current collector and a positive electrode film layer which is provided on at least one surface of the positive electrode current collector and includes a positive electrode active material and a lithium supplement agent. For example, the positive electrode current collector has two opposite surfaces in the thickness direction thereof, and the positive electrode film layer is provided on either or both of the two opposite surfaces of the positive electrode current collector. In the secondary battery of the present application, the positive electrode current collector may be a metal foil or a composite current collector, for example, the metal foil may be an aluminum foil, and the composite current collector may include a polymer material substrate and a metal layer formed on at least one surface of the polymer material substrate. The composite current collector may be formed by forming a metal material on the polymer material substrate.

According to an implementation of the present application, the lithium supplement agent contains a compound L, and a molecular formula of the compound L is LiₓNiₐCu_{1-a-b}M_{b}O₂, where 1 ≤ x ≤ 2, 0 < a < 1, and 0 ≤ b < 0.1, and M is selected from one or more of Zn, Sn, Mg, Fe, and Mn.

In an embodiment of the present application, in the molecular formula of the compound L, 0 < a <1. In another embodiment of the present application, in the molecular formula of the compound L, 0.1 ≤ a ≤ 0.9. Optionally, 0.2 ≤ a ≤ 0.6, and further optionally, 0.2 ≤ a ≤ 0.4. In another embodiment of the present application, for the compound L, a is 0.1, 0.2, 0.3, 0.4, 0.5, or 0.6.

In an embodiment of the present application, in the molecular formula of the compound L, 0 ≤ b < 0.1. In another embodiment of the present application, in the molecular formula of the compound L, 0 ≤ b ≤ 0.05. In another embodiment of the present application, for the compound L, b = 0 or 0.05. In another embodiment of the present application, for the compound L, b = 0.05.

In the present application, when relative molar ratios a and (1-a-b) of element Ni to element Cu in the compound L are within the above range, it is beneficial to synthesize a compound L with a relatively high degree of crystallinity at a relatively low temperature, and thus effectively reduce production costs. In addition, the lithium supplement agent containing the compound may be also ensured to have a relatively high capacity per gram and charging/discharging plateau, thereby facilitating an improvement in energy density of the lithium secondary battery.

In an embodiment of the present application, the compound L, for example, includes, but is not limited to, Li₂Ni_{0.1}Cu_{0.9}O₂, Li₂Ni_{0.2}Cu_{0.8}O₂, Li₂Ni_{0.3}Cu_{0.7}O₂, Li₂Ni_{0.4}Cu_{0.6}O₂, Li₂Ni_{0.5}Cu_{0.5}O₂, Li₂Ni_{0.6}Cu_{0.4}O₂, Li₂Ni_{0.7}Cu_{0.3}O₂, Li₂Ni_{0.8}Cu_{0.2}O₂, Li₂Ni_{0.9}Cu_{0.1}O₂, or Li₂Ni_{0.4}Cu_{0.55}Mg_{0.05}O₂.

According to a preferred implementation of the present application, based on the total weight of the positive electrode film layer, the content of the lithium supplement agent in the positive electrode film layer is 0.1-50 wt %.

According to an implementation of the present application, the lithium supplement agent and the positive electrode active material are uniformly distributed in the whole positive electrode film layer. According to another implementation of the present application, optionally, an outer surface of the lithium supplement agent is partially or completely covered with one or more external coating layers.

In some implementations, the positive electrode film layer also optionally includes a binder, a conductive agent, etc. In an implementation of the present application, a positive electrode plate can be prepared by: dispersing, into a solvent, the above-mentioned components for preparing the positive electrode, such as the positive electrode active material, the lithium supplement agent, the conductive agent, the binder and any other components, to form a uniform positive electrode slurry; and coating the positive electrode current collector with the positive electrode slurry, followed by the procedures such as drying and cold pressing, so as to obtain the positive electrode plate.

### Negative electrode plate

The secondary battery of the present application includes a negative electrode plate. The negative electrode plate includes a negative electrode current collector and a negative electrode film layer provided on at least one surface of the negative electrode current collector, the negative electrode film layer including a negative electrode active material, for example, one or more of natural graphite, artificial graphite, oft carbon, hard carbon, a silicon-based material, a tin-based material, and lithium titanate. The silicon-based material may be selected from one or more of elemental silicon, silicon oxides, and silicon carbon composites. The tin-based material can be selected from one or more of elemental tin, a tin oxide compound, and a tin alloy.

In the secondary battery of the present application, in addition to the negative electrode active material, the negative electrode film layer further includes an optional binder, an optional conductive agent, and other optional auxiliary agents, and is usually formed by coating a negative electrode slurry, followed by drying. The negative electrode slurry is generally formed by dispersing a negative electrode active material, and an optional conductive agent and a binder, etc. into a solvent and uniformly stirring same. The solvent may be N-methylpyrrolidone (NMP) or deionized water.

As an example, the conductive agent may include one or more of superconducting carbon, carbon black (for example, acetylene black, Ketjen black), carbon dots, carbon nanotubes, graphene, and carbon nanofibers.

In addition, in the secondary battery of the present application, the negative electrode plate may include other additional functional layers in addition to the negative electrode film layer. For example, in some implementations, the negative electrode plate of the present application may also include a conductive primer (e.g., composed of a conductive agent and a binder) provided between the negative electrode current collector and a first negative electrode film layer and provided on the surface of the negative electrode current collector. In some other implementations, the negative electrode plate of the present application may also include a protective cover layer covering the surface of a second negative electrode film layer.

In the secondary battery of the present application, the negative electrode current collector may be a metal foil or a composite current collector.

### Electrolyte

The electrolyte is located between the positive electrode plate and the negative electrode plate and functions for conducting ions. The electrolyte may be selected from at least one of a solid electrolyte and a liquid electrolyte (i.e., an electrolyte solution). In some implementations, the electrolyte is an electrolyte solution. The electrolyte solution includes an electrolyte salt and a solvent. In an implementation of the present application, based on the total weight of the electrolyte solution, the content of the solvent is 60-99 wt %. In an implementation of the present application, based on the total weight of the electrolyte solution, the content of the electrolyte is 1-40 wt %.

### Separator

In an implementation of the present application, the secondary battery further includes a separator, which separates the anode side from the cathode side of the secondary battery, and provides selective permeation or barrier to substances of different types, sizes and charges in the system, for example, the separator may insulate electrons, physically isolate the positive and negative electrode active materials of the secondary battery, prevent internal short circuits and form an electric field in a certain direction, and also enable the ions in the battery to pass through the separator to move between the positive and negative electrodes. In an implementation of the present application, the material used to prepare the separator may include one or more of a glass fiber, a non-woven fabric, polyethylene, polypropylene, and polyvinylidene fluoride. The separator may be a single-layer film, or a multi-layer composite film. When the separator is a multi-layer composite film, the materials of respective layers may be the same or different.

### Cell and secondary battery

In an implementation of the present application, the above positive electrode plate, negative electrode plate and separator may form an electrode assembly/bare cell by a winding process or a lamination process.

In an implementation of the present application, the secondary battery may include an outer package which may be used to encapsulate the above electrode assembly and electrolyte. In some implementations, the outer package of the secondary battery may be a hard shell, such as a hard plastic shell, an aluminum shell, or a steel shell. In some other implementations, the outer package of the secondary battery may be a soft bag, such as a pouch-type soft bag.

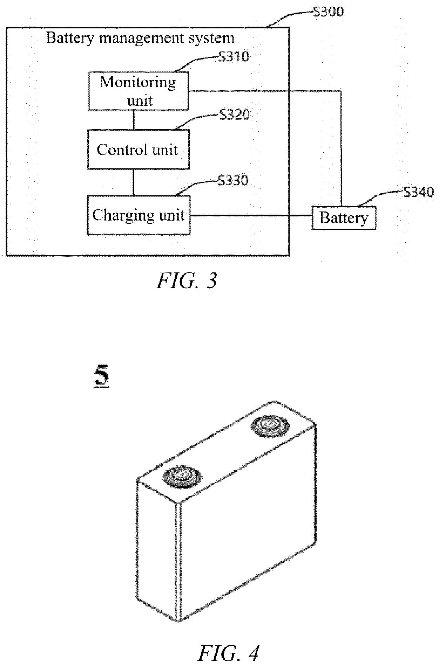

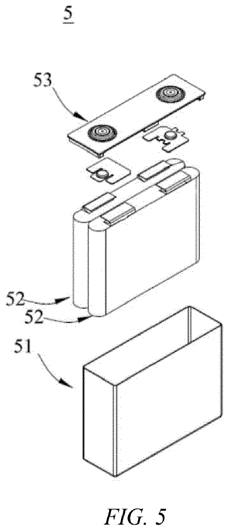

The secondary battery of the present application may be of a cylindrical, square or any other shape. For example, FIG. 4 is a square secondary battery 5 as an example. FIG. 5 shows an exploded view of the secondary battery 5 shown in FIG. 4. The outer package may include a housing 51 and a cover plate 53, where the housing 51 may include a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate, the negative electrode plate, and the separator may form an electrode assembly 52 by a winding process or a lamination process, the electrode assembly is encapsulated in the accommodating cavity, and the electrolyte solution infiltrates into the electrode assembly 52. The secondary battery 5 may include one or more electrode assemblies 52.

According to various implementations of the present application, there is provided a method for recovering activity of a lithium ion battery, the method including: obtaining a battery state-of-health value of a lithium ion battery during a charging process; when the battery state-of-health value is less than or equal to a first preset threshold, applying an activation voltage to the lithium ion battery, such that lithium ions at a lithium supplement agent included in the battery are released to an electrolyte solution, where the activation voltage is higher than a normal charging voltage of the lithium ion battery; when the battery state-of-health value increases to be greater than or equal to a second preset threshold, recovering from the activation voltage to the normal charging voltage.

In order to solve a problem of a loss of lithium in a lithium ion battery due to a side reaction of first charging, and to improve the initial coulombic efficiency of lithium ions and thus obtain a lithium ion battery with a long service life, excessive active lithium needs to be supplemented for consumption by the side reaction during a cycling storage process. In previous scientific achievements, an idea to improve the initial coulombic efficiency and prolong the battery service life is that a positive electrode or a negative electrode is pre-lithiated and an excessive storage of lithium ions is provided in the battery. However, there are various kinds of defects in terms of specific operation. For example, the most common method for pre-lithiation of a negative electrode involves pre-lithiating a negative electrode material using a metal lithium powder or lithium tape, so as to provide sufficient active lithium for consumption by an SEI film during the first charging process. However, the method has disadvantage of high costs, complex preparing processes, and poor practicability, and is thus not beneficial to large-scale commercial application. In addition, a disadvantage of lithium supplement for a negative electrode mainly lies in that, the lithium powder is directly coated on the surface of graphite, and therefore, there must be excessive graphite to prevent lithium precipitation, that is, cell balance during a discharging process of the graphite needs to be much higher than cell balance during a charging process, resulting in that the amount of graphite is much greater than that of graphite in a non-lithium-supplementing cell, and there may be extra graphite after capacity decrease, which decreases an energy density and increases costs, and is greatly lowered in terms of electrical performance and economical efficiency. In addition, it is important that the above side reactions of consuming the lithium ions are continued during a normal usage process of the battery, and the above technique for lithium supplement for a negative electrode neither implements continuous lithium supplement for a battery (to maintain activity of the battery for a long time), nor achieves a purpose of maintaining the activity of the battery at a relatively high level for a long time.

Similarly, an idea of lithium supplement for a positive electrode is to include a lithium supplement agent (a rich lithium material) in the positive electrode and to provide an excessive amount of lithium ions in the system during first charging, so as to at least partially offset the consumption of lithium ions caused by the above side reactions. However, this also has the problem of an inability to maintain the activity of the battery for a long time.

By means of the method developed in the present application, all of the above problems are successfully solved. In the method of the present application, the lithium ions are prestored in the positive electrode in the form of the lithium supplement agent, and the lithium supplement agent releases part of lithium ions into the electrolyte at a first charging voltage during the first charging process, which effectively supplements lithium ions lost from the electrolyte due to the side reactions during the first charging process. Moreover, a considerable part of the lithium ions is still stored in the lithium supplement agent in the positive electrode, which avoids a problem of the lithium precipitation on the negative electrode or excessive content of the graphite, thereby effectively maintaining a high energy density and also saving on costs. In addition, by means of the method of the present application, the lithium ions are effectively stored in the lithium supplement agent in the positive electrode, such that the stored lithium ions are prevented from being lost rapidly. a state-of-health of the battery is monitored during a normal charge/discharge process, and the lithium ions are supplemented in an efficient and controlled manner as desired, thereby recovering the activity of the battery. In this way, the content and activity of the lithium ions in the battery can be maintained for a long time.

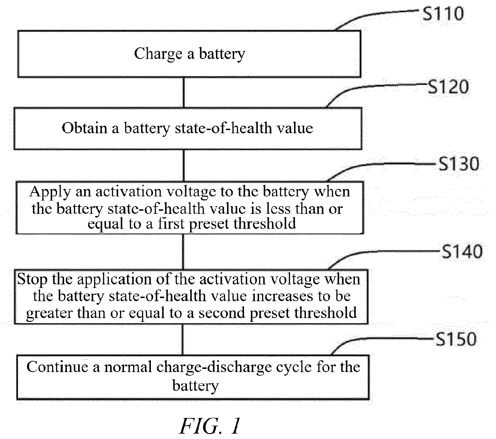

FIG. 1 is a schematic flowchart of a method for recovering activity of a battery according to an implementation of the present application. As shown in FIG. 1, the method for recovering activity of a battery in this implementation may include steps S 110 to S150.

In S110, a battery is charged.

The charging may be performed using a stand-alone conventional charging device or a charging device integrated into a battery management system (BMS). The charging process is to maintain the battery with power required for its normal operation.

In S120, a battery state-of-health value is obtained.

A monitoring apparatus in the BMS is used to measure one or more state-of-health values of the battery, such as a battery capacity, a remaining capacity, an energy density, a power density, an electromotive force, an open-circuit voltage, an operating voltage, an end-of-discharge voltage, and an operating current. The state-of-health value may be measured at a specific time, or may be an integral result or an average value of a series of numerical values measured during a specific period of time.

The battery capacity refers to an amount of power that a battery stores, usually in "ampere-hours" or "milliampere-hours". The remaining capacity of the battery refers to a capacity of the battery after discharge to an end-of-discharge voltage in a current state. The energy density of the battery refers to energy contained per unit volume, commonly in "joules/cubic meter". The power density of the battery is a ratio of an output power of the battery to a weight thereof. The electromotive force, also known as a standard voltage or a theoretical voltage of a battery, is a potential difference between a positive electrode and a negative electrode when the battery breaks a circuit. The open-circuit voltage refers to a potential difference between a positive electrode and a negative electrode of the battery when no current flows through an external circuit. Generally, the open-circuit voltage is less than the electromotive force of the battery. The operating voltage, also known as a discharging voltage or a load voltage, refers to a potential different between electrodes of the battery when a current flows through the external circuit, and is an actual output voltage of the battery during an operation. The end-of-discharge voltage of the battery refers to a minimum operating voltage value below which the battery cannot continue discharging when discharging of the battery. The operating current of the battery refers to a discharging current during actual use of the battery.

In S130, when the battery state-of-health value is less than or equal to a first preset threshold, an activation voltage is applied to the battery.

The first preset threshold herein may be flexibly designed as required. For example, it may be a specific proportion of an initial health value after first charging of the battery, such as 70%-90% or 80%-85% of the initial health value. The first preset threshold may be input into a control unit of the BMS, and the control unit of the BMS issues an instruction to a charging unit based on a signal for the health value that is sent by a monitoring unit, to apply the activation voltage to the battery. The activation voltage is higher than a normal charging voltage of the battery during a normal charge/discharge process, so that a lithium supplement agent in a positive electrode of the battery is activated to release lithium ions into an electrolyte of the battery, to recover activity of the battery.

In S140, when the battery state-of-health value increases to be greater than or equal to a second preset threshold, the application of the activation voltage is stopped.

The second preset threshold herein may be flexibly designed as required. For example, it may be a specific proportion of an initial health value after first charging of the battery, such as 90%-110% or 95%-105% of the initial health value. The second preset threshold may be input into a control unit of the BMS, and the control unit of the BMS issues an instruction to a charging unit based on a signal for the health value that is sent by a monitoring unit, to stop the application of the activation voltage to the battery. In this case, it is considered that the activity of the battery has been recovered for subsequent normal operations, that is, charge-discharge operations at the normal charging voltage.

In S150, a normal charge-discharge cycle is continued for the battery.

The activated battery has activity at least partially recovered because the lithium ions are supplemented, and the activity may be represented by the above state-of-health value. Subsequently, the battery may be subjected to the normal charge-discharge cycle at a normal charging/discharging voltage. As for laboratory studies, the battery may then perform a conventional charge-discharge operation at the normal charging voltage by using the BMS, to detect various performances thereof. In practice, the battery is included in various power consuming devices, for example, included in an electric vehicle, and is subjected to a charge-discharge cycle during daily use.

Optionally, the battery processed by the method of the present application is a secondary battery, preferably a secondary lithium ion battery.

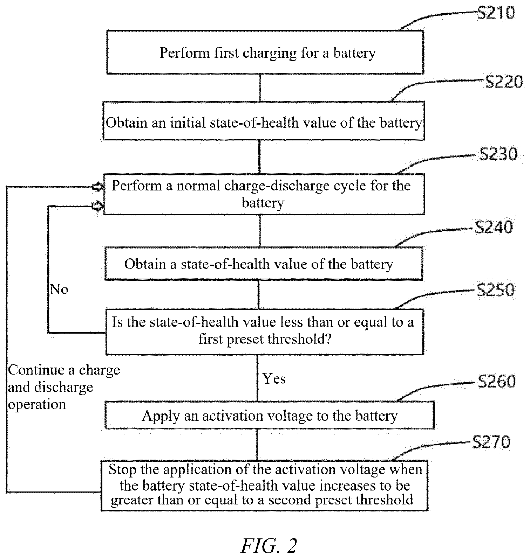

FIG. 2 shows a schematic flowchart of a method for recovering activity of a battery according to another implementation of the present application. As shown in FIG. 2, the method for recovering activity of a battery in this implementation may include steps S210 to S270.

In S210, first charging is performed for a battery.

In a secondary battery, particularly a secondary lithium ion battery, the battery is manufactured and then needs to be subjected to first charging. During the first charging process, part of lithium ions in an electrolyte is inevitably reduced and decomposed on the surface of a negative electrode material, thereby forming a solid electrolyte interphase (SEI) film and being then lost. Optionally, the first charging is performed at a voltage for a conventional charge/discharge cycle. At the first-charging voltage, part of lithium ions included in a lithium supplement agent in a positive electrode of the battery is released into an electrolyte solution of the battery, to supplement the part of lithium ions lost during the first charging process.

In S220, an initial state-of-health value of the battery is obtained.

In the present application, it is considered to obtain the initial state-of-health value of the battery during or after the first charging of the battery. The initial state-of-health value of the battery after the first charging may be used as an important reference factor for subsequent determination of a first threshold and a second threshold. Optionally, the first threshold may be a specific proportion of the initial state-of-health value, such as 70%-90% or 80%-85% thereof, and the second threshold may be a specific proportion of the initial state-of-health value, such as 90%-110% or 95-105% thereof.

In S230, the battery is subjected to a normal charge-discharge cycle.

The battery that has been subjected to the first charging performs a normal charge/discharge operation under a normal charge/discharge condition, and the operation may be controlled using a BMS. According to some implementations of the present application, a charging voltage for the normal charge/discharge operation may be equal to the above first-charging voltage, or higher or lower than the first-charging voltage. During the normal charge/discharge process, the lithium ions are still gradually lost, which may result in a decrease in activity of the battery, and the decrease in the activity may be represented by one or more state-of-health values.

In the present application, a process condition, such as a charging voltage, used during the process of normal charging/discharging of the battery may be reasonably adjusted based on a positive electrode active material, a type of the lithium supplement agent in the positive electrode, a negative electrode active material, an electrolyte, required battery performance, etc., that are specifically used in the battery. For example, in the following embodiment, a charging voltage of 3.65 V is used during the normal charge/discharge process. However, it should be understood that the charging voltage that can be used in the method of the present application should not be limited thereto, and may be appropriately adjusted within a reasonable range according to an actual situation.

In S240, a battery state-of-health value is obtained.

During the normal charge-discharge process, the BMS is used to monitor one or more state-of-health values of the battery in a continuous or intermittent manner. For example, the one or more state-of-health values of the battery are measured after each charging is completed, or during each charging.

In S250, it is determined whether the state-of-health value is less than or equal to a first preset threshold.

As described above, the first threshold may be determined according to requirements of the battery in actual application or an industry standard, may be input into a control unit of the BMS in advance, or may be automatically generated by the control unit of the BMS based on the initial state-of-health value obtained from a monitoring unit. During the normal charge-discharge process of the battery, the monitoring unit of the BMS obtains information of the battery state-of-health value in a continuous or intermittent manner, and transmits the information to the control unit. When the battery state-of-health value is still greater than the first threshold, the battery continues to perform a normal charge-discharge operation. When the battery state-of-health value decreases to be equal to or lower than the first threshold, the step S260 is performed.

In S260, an activation voltage is applied to the battery.

When the battery state-of-health value decreases to be equal to or lower than the first threshold, the control unit of the BMS issues an instruction to a charging unit thereof, to enable the charging unit to apply the activation voltage to the battery. The activation voltage is higher than a normal charging voltage. Under the action of the activation voltage, part of lithium ions (the part of lithium ions that is not released at a normal charging/discharging voltage) stored in the lithium supplement agent in the positive electrode of the battery is at least partially released from the positive electrode to supplement lithium ions lost from the electrolyte solution, so that the activity of the battery is recovered.

In S270, when the battery state-of-health value increases to be greater than or equal to a second preset threshold, the application of the activation voltage is stopped.

When the battery state-of-health value increases to be greater than or equal to the second preset threshold, it indicates that the lithium ions lost from the battery during the normal charge-discharge cycle have been adequately compensated for. At this time, the activation voltage is relieved, and the battery has recovered the activity that is close to, equal to, or even exceeds an initial state thereof. In this case, based on the information given by the monitoring unit, the control unit issues, to the charging unit, an instruction to stop activation. According to some implementations of the present application, the second threshold may be a specific proportion of a state-of-heath value of the battery after the first charging, such as 90%, 95%, 98%, 99%, 100%, 102%, 105%, or 110% thereof.

The method of the present application may have some specific preferred implementations. According to a preferred implementation, the lithium supplement agent is included in the positive electrode of the lithium ion battery, and can thus be gradually released based on an activation condition in a controlled manner, so that the service life is prolonged as much as possible. According to another preferred implementation, the battery state-of-health value is selected from at least one of the following parameters: a battery capacity, a remaining capacity, an energy density, a power density, an electromotive force, an open-circuit voltage, an operating voltage, an end-of-discharge voltage, and an operating current. Therefore, monitoring of an active level (content of the lithium ions) of the battery and implementation of activation are selected flexibly based on differences of different products, different scales, and different uses and purposes. According to another preferred implementation of the present application, the battery state-of-health value is a real-time capacity Cᵣₑₐₗ₋ₜᵢₘₑ of the lithium ion battery, an initial capacity of the lithium ion battery during a first charge-discharge cycle is C₀, and the threshold is C₀ × 80%, where when Cᵣₑₐₗ₋ₜᵢₘₑ decreases to be lower than or equal to C₀ × 80%, the activation voltage is applied to the lithium ion battery. A capacity of the battery is an very important and widely used technical indicator, which is conducive to more accurate monitoring of the activity level (the content of the lithium ions) of the battery and implementation of activation. According to another preferred implementation of the present application, after the first charge-discharge cycle, an operation of applying the activation voltage is not performed, and subsequent second to Nth charge-discharge operations are performed directly, where N is an integer from 2 to 500,000, and the second to Nth charge-discharge operations are performed at the normal charging voltage; during the second to Nth charge-discharge operations, the real-time capacity Cᵣₑₐₗ₋ₜᵢₘₑ of the lithium ion battery gradually decreases, and each time Cᵣₑₐₗ₋ₜᵢₘₑ is lower than C₀ × 80%, the activation voltage V_{activation} is applied to the lithium ion battery for activity recovery; and when the battery state-of-health value increases to be greater than or equal to the second preset threshold, the activation voltage is recovered to the normal charging voltage, and the charge-discharge operations are continued. The technical solutions of the present application may achieve an extremely excellent stability of the battery capacity and an extremely long service life, which may even reach hundreds of thousands of cycles. According to another implementation of the present application, the operation of applying the activation voltage V_{activation} to the lithium ion battery for activity recovery is performed more than once, and starting from the second time, the activation voltage for each activity recovery is increased relative to the activation voltage for a previous activity recovery, where the activation voltage is increased at a fixed extent each time or at a varying extent each time. By means of this stepwise multi-step activation operation, the lithium ions can be supplemented in a more accurate and saving manner, thereby effectively avoiding a waste of the lithium ions, prolonging the battery service life quite effectively, and avoiding excessive lithium ions in a battery system, which is of great significance to maintaining the stability of battery performance and inhibiting occurrence of side reactions of the lithium ions. According to another preferred implementation of the present application, the operation of applying the activation voltage V_{activation} to the lithium ion battery for activity recovery is performed more than once, and starting from the second time, the activation voltage for each activity recovery is increased ≥0.1 volts relative to the activation voltage for a previous activity recovery. In this way, the lithium ions can be supplemented finely, the waste of the lithium ions is avoided, the battery service life is prolonged, and the battery performance can be kept stable and the occurrence of the side reactions of the lithium ions can be inhibited. According to a preferred implementation of the present application, the operations of applying the normal charging voltage and the activation voltage are performed using a same charging device, such that the lithium supplement and activation processes for a battery can be performed as conveniently as possible.

Compared with secondary batteries and battery activation methods described in the prior art, the secondary battery and the battery activation method of the present application has an most important improvement in that the lithium ions in the lithium supplement agent may be regarded as being divided into at least two parts, where the first part of lithium ions is de-intercalated from the lithium supplement agent during a process of first charging of the battery (the normal charging voltage is used for the first charging and is lower than the activation voltage), and then enters into an electrolyte. According to an implementation of the present application, during a process of performing the first charging at the normal charging voltage, part of lithium ions in a positive electrode active material in a positive electrode is also de-intercalated from the positive electrode and then enters into the electrolyte, to compensate for that part of lithium ions lost during the first charging process. After the first charging, the secondary battery is then subjected to a conventional charge-discharge cycle at the normal charging voltage. With the charge-discharge cycle, one or more side reactions may occur in the secondary battery. For example, some components in the electrolyte are reduced and decomposed on the surface of a negative electrode, to form a solid electrolyte interphase (SEI) film, resulting in gradual losses of the lithium ions in the electrolyte, and thus gradually deteriorating the overall performance of the secondary battery. In some implementations of the present application, at least one parameter of the secondary battery is selected to represent a state of health of the secondary battery. The selected parameter, called "a battery state-of-health value", may be selected from at least one of the following parameters: a battery capacity, a remaining capacity, an energy density, a power density, an electromotive force, an open-circuit voltage, an operating voltage, an end-of-discharge voltage, and an operating current. The battery state-of-health value of the secondary battery may be measured in a continuous or intermittent manner. For example, the state-of-health value of the secondary battery may be monitored in the continuous manner by using a sensor connected to the secondary battery. Alternatively, the state-of-health value of the secondary battery may be monitored in the intermittent manner in units of one or more hours, days, weeks, or months as intervals. Alternatively, more preferably, the state-of-health value of the secondary battery is measured every time the secondary battery is charged. In this case, a measurement apparatus for measuring the state-of-health value may be provided in a device (e.g., a vehicle) using the secondary battery, or in a charging device (e.g., a charging pile or a charging station). The measuring apparatus for measuring the state-of-health value may be a monitoring unit in a BMS. The BMS may be provided in the vehicle or mounted in the charging device.

According to a preferred implementation of the present application, a real-time capacity Cᵣₑₐₗ₋ₜᵢₘₑ of the secondary battery is selected as the above battery state-of-health value, and an initial capacity of the lithium ion battery in a first charge-discharge cycle is C₀, which is selected from a specific battery capacity threshold, the threshold being less than the initial capacity C₀. With the charge-discharge cycle for the battery, the real-time capacity Cᵣₑₐₗ₋ₜᵢₘₑ of the lithium ion battery gradually decreases. When Cᵣₑₐₗ₋ₜᵢₘₑ of the secondary battery decreases to be equal to or lower than the first threshold, an activation voltage is applied to the secondary battery, the activation voltage being higher than the above normal charging voltage for a conventional charge-discharge process. Under the action of a relatively high activation voltage, a remaining part of lithium ions in the lithium supplement agent is de-intercalated from the lithium supplement agent and then enters into an electrolyte (an electrolyte solution), to compensate for the lithium ions lost from the battery, such that the performance of the secondary battery is recovered. This process is called an activity recovery process for the battery in the present application. According to an implementation of the present application, the above activity recovery operation may enable the state-of-health value of the lithium ion secondary battery to increase to be equal to or higher than a second threshold. As described above, the second threshold may be a specific proportion of a state-of-health value (i.e., an initial state-of-health value) of the battery that is obtained after the first charging, for example, 90%, 95%, 100%, 105%, 110%, etc., of the initial state-of-health value. According to a preferred implementation of the present application, after the above activity recovery operation, performance of the secondary battery (e.g., any one or more performances that may be used as the battery state-of-health value as described above) is recovered to at least 97%, or at least 98%, or at least 99%, or at least 99.5%, or at least 99.9%, or 100% of the performance (e.g., the initial capacity C₀) that is obtained after the first charging of the secondary battery. Herein, a ratio of the state-of-health value (e.g., Cᵣₑₐₗ₋ₜᵢₘₑ) that is obtained after one activity recovery to the performance (e.g., the initial capacity C₀) that is obtained after the first charging of the secondary battery is referred to as an activity recovery ratio. In some implementations, based on specifically used process parameters for activity recovery, the state-of-health value that is obtained after each activity recovery (e.g., Cᵣₑₐₗ₋ₜᵢₘₑ) may even be higher than the performance (e.g., the initial capacity C₀) that is obtained after the first charging of the secondary battery. In other words, the activity recovery ratio may be greater than 100%, such as ≤ 101%, or ≤ 102%, or ≤ 103%, or ≤ 104%, or ≤ 105%, or ≤ 106%, or ≤ 107%, or ≤ 108%, or ≤ 110%. According to a preferred implementation of the present application, the threshold is 70%, or 72%, or 75%, or 78%, or 80%, pr 82%, or 85%, or 88%, or 90%, or 92%, or 95% of a specifically selected state-of-health value that is obtained after the first charging of the secondary battery. For example, when the battery capacity is selected as the state-of-health value, the threshold may be 70%, or 72%, or 75%, or 78%, or 80%, or 82%, or 85%, or 88%, or 90%, or 92%, or 95% of an initial battery capacity C₀ that is obtained after the first charging of the secondary battery.

According to some implementations of the present application, after the first activity recovery described above, the battery continues to perform the conventional charge-discharge operation, and the state-of-health value thereof is measured in a continuous or intermittent manner. After a real-time state-of-health value of the battery decreases to the above threshold again, an N^{th} activation voltage is then applied to the secondary battery for the N^{th} activity recovery of the battery, where N is an integer from 2 to 500,000, such as 2, 3, 5, 6, 8, 10, 15, 20, 50, 80, 100, 200, 300, 400, 500, 600, 700, 800, 900, 1000, 1200, 1500, 1800, 2000, 2200, 2500, 2800, 3000, 3200, 3500, 3800, 4000, 4500, or 5000. According to a preferred implementation of the present application, the activation voltage V_{N} for the N^{th} activity recovery operation is higher than the activation voltage V_{N-1} for an (N - 1)^{th} activity recovery operation. A voltage difference between V_{N} and V_{N-1} is preferably ≥ 0.1 volts. According to another preferred implementation of the present application, starting from a second activation recovery operation, the activation voltage for each activity recovery is increased ≥ 0.1 volts relative to the activation voltage for a previous activity recovery. According to another implementation of the present application, the activation voltage for each activity recovery is increased at a fixed or varying extent relative to the activation voltage for a previous activity recovery. For example, the activation voltage may be increased at an extent of any one of the following numerical values, or at an extent within a numerical value range (in volts) obtained by combining any two of the following numerical values: 0.1, 0.11, 0.12, 0.15, 0.18, 0.20, 0.21, 0.22, 0.25, 0.28, 0.30, 0.31, 0.32, 0.35, 0.38, 0.40, 0.45, 0.48, 0.50, 0.51, 0.52, 0.55, 0.58, 0.60, 0.61, 0.62, 0.65, 0.68, 0.70, 0.71, 0.72, 0.75, 0.78, 0.80, 0.81, 0.82, 0.85, 0.88, 0.90, 0.91, 0.92, 0.95, 0.98, 1.0, 1.05, 1.1, 1.15, 1.2, 1.25, 1.3, 1.35, 1.4, 1.45, and 1.5.

According to another implementation of the present application, the activation voltage V_{N} for the N^{th} activity recovery operation may be equal to the activation voltage V_{N-1} for the (N-1)^{th} activity recovery operation.

According to a specific embodiment of the present application, there is specifically prepared a lithium ion secondary battery, and a plurality of activation operations are performed on the lithium ion secondary battery using the method of the present application, to fully show excellent technical effects achieved by the lithium ion secondary battery. A lithium supplement agent used in the specific embodiment is prepared by means of conventional spray drying /roasting, and the composition of elements in the lithium supplement agent is controlled at a proportion of raw materials. The prepared lithium supplement agent is composed of at least one of the following elements: Lᵢ₂Ni_{0.1}Cu_{0.9}O₂, Li₂Ni_{0.2}Cu_{0.8}O₂, Li₂Ni_{0.3}Cu_{0.7}O₂, Li₂Ni_{0.4}Cu_{0.6}O₂, Li₂Ni_{0.5}Cu_{0.5}O₂, Li₂Ni_{0.6}Cu_{0.4}O₂, Li₂Ni_{0.7}Cu_{0.3}O₂, Li₂Ni_{0.8}Cu_{0.2}O₂, Li₂Ni_{0.9}Cu_{0.1}O₂, or Li₂Ni_{0.4}Cu_{0.55}Mg_{0.05}O₂.

The secondary battery was prepared by the above lithium supplement agent according to the following steps, and was subjected to a charge/discharge cycle and an activity recovery operation.

### Preparation of positive electrode plate

A positive electrode active material of lithium iron phosphate (LFP), a conductive agent of acetylene black, a binder of polyvinylidene fluoride (PVDF) and the above lithium supplement agent were fully stirred and uniformly mixed in an appropriate amount of N-methyl pyrrolidone (NMP) in a weight ratio of (0.98 × 97) : (0.98 × 1) : (0.98 × 2) : 10, to form a uniform positive electrode slurry; and then the positive electrode slurry was coated onto two surfaces of a positive electrode current collector of aluminum foil, followed by drying and cold pressing, to obtain a positive electrode plate. The positive electrode film layer had a surface density of 300 mg/cm² and a compacted density of 2.4 g/cm³.

### Preparation of negative electrode plate

A negative electrode active material of artificial graphite, a conductive agent of acetylene black, a binder of styrene-butadiene rubber (SBR), and a thickening agent of sodium carboxymethyl cellulose (CMC-Na) were fully stirred and mixed in an appropriate amount of deionized water in a weight ratio of 96.5:0.7:1.8:1, to form a negative electrode slurry; and the negative electrode slurry was coated onto two surfaces of a negative electrode current collector of copper foil, followed by drying and cold pressing, to obtain a negative electrode plate. The negative electrode plate had a compacted density of 1.6 g/cm³ and a surface density of 150 mg/cm².

### Separator

A PE/PP porous polymeric thin film having a thickness of 16 µm is selected as the separator.

### Preparation of electrolyte solution

Ethylene carbonate (EC), propylene carbonate (PC), and diethyl carbonate (DEC) were mixed uniformly in a volume ratio of 1:1:1, and then lithium electrolyte salt LiBOB was dissolved in the above solvent, to obtain an electrolyte solution, where the concentration of LiBOB was 1 mol/L.

### Preparation of secondary battery

The above positive electrode plate, separator, and negative electrode plate were stacked in order, followed by winding, to obtain an electrode assembly. The electrode assembly was put into an outer package and the electrolyte solution was added in, followed by encapsulating, to obtain a lithium ion secondary battery.

The prepared lithium ion secondary battery is subjected to a charge-discharge cycle and an activity recovery (battery capacity recovery) operation in the following manner.

At a normal temperature, the battery was subjected to first charging, and the battery was charged at a constant current rate of 1 C to 3.65 V, and then charged at a constant voltage to a current of 0.05 C. A specific charge capacity and a specific discharge capacity of the battery that are measured after the first charging were respectively used as an "initial specific charge capacity" and an "initial specific discharge capacity", and 80% of the above initial specific charge capacity (i.e., the initial specific charge capacity × 80%) was selected as a preset threshold. Then, the battery was subjected to a conventional charge/discharge cycle at the normal temperature in the following condition: "charging the battery at the normal temperature, and charging the battery at a constant current rate of 1 C to 3.65 V, then charging the battery at a constant voltage to a current of 0.05 C, and discharging the battery at a constant current of 1 C to 2.5 V". During the charge/discharge cycle, the specific charge capacity and the specific discharge capacity of the secondary battery are continuously monitored using a battery management system (BMS). When the BMS system monitored that the specific charge capacity of the second battery drops to the preset threshold (i.e., the initial specific charge capacity × 80%), the secondary battery was charged at the constant current rate of 1 C to an activation voltage, followed by being subjected to constant voltage charging at the activation voltage to a current of 0.05 C, discharged at the constant current of 1 C to 2.5 V, and then being subjected to the above conventional charge/discharge process at a charging voltage of 3.65 V. A next operation of applying the activation voltage was not performed until the specific charge capacity of the secondary battery drops to the preset threshold (i.e., the initial specific charge capacity × 80%) again. Such operation was continued until 50,000 normal charge/discharge cycles of 3.65v were performed. Information for each activity recovery operation of the battery is summarized in the following table.

It should be particularly noted herein that, for a purpose of illustration in the above specific embodiments, a normal charging voltage of 3.65 V is used for the secondary lithium ion battery with lithium iron phosphate as the positive electrode active material. However, the voltage may be adjusted based on specific characteristics of the secondary battery. For example, the charging voltage for the secondary lithium ion battery with lithium iron phosphate as the positive electrode active material may be within a range of 1.6-4.5 V; the charging voltage for the secondary lithium ion battery with three elements of Ni, Co, and Mn as the positive electrode active material may be within a range of 2.5-4.5 V; and the charging voltage for the secondary lithium ion battery with lithium manganate as the positive electrode active material may be within a range of 2.8-4.6 V. Additionally, in addition to a type of the positive electrode active material, the charging voltage may be appropriately adjusted depending on other factors, including a type of the lithium supplement agent, a size of a positive electrode, an amount of the positive electrode active material, a type of an electrolyte, an amount of a negative electrode active material, a size of a negative electrode, and use and a required performance of the battery. The charging voltage used by the secondary lithium ion battery may be appropriately adjusted within a range of 1.5-4.6 V depending on the above factors.

The specific charge capacity and specific discharge capacity shown in the table below were tested in the following manner.

Test of specific charge/discharge capacity

At a normal temperature (25°C), the battery was charged at a constant current rate of 1 C to 3.65 V, followed by constant voltage charging to a current of 0.05 C, and a charging capacity at this moment was recorded, that is, the charging capacity; and the battery was discharged at a constant current of 1 C to 2.5 V, and a discharge capacity at this moment was recorded, that is, the discharge capacity.

Specific charge capacity (mAh/g) = charge capacity/mass of positive electrode active material

Specific discharge capacity (mAh/g) = discharge capacity/mass of positive electrode active material

The specific charge capacity and the specific discharge capacity that are listed in the table below are respectively the specific charge capacity and the specific discharge capacity that are measured immediately after the first conventional charging or the N^{th} activity recovery, where the specific charge capacity and the specific discharge capacity that are obtained after the first charging are the initial values described above.

**Table 1: Activity recovery operation and specific battery capacity of the secondary battery of the present invention**

| | Number of times of normal charging/discharging | Used activation voltage (V) | Specific charge capacity (mAh/g) | Specific discharge capacity (mAh/g) |
|---|---|---|---|---|
| First conventional charging | 1 | - | 176 | 132 |
| First activity recovery | 10,853 | 3.78 | 176 | 132 |
| Second activity recovery | 19,746 | 3.88 | 176 | 132 |
| Third activity recovery | 28,912 | 3.98 | 174 | 131 |
| Fourth activity recovery | 37,003 | 4.08 | 172 | 130 |
| Fifth activity recovery | 45,367 | 518 | 170 | 130 |

As can be seen from experimental results shown in Table 1 above, the present invention achieves the following beneficial effects by specifically designing a step-by-step activity recovery operation.
1. Active lithium ions in an electrolyte that are consumed for forming an SEI film can be effectively supplemented during first charging, and therefore, a battery with a high energy density may be obtained after the first charging.
2. Compared with other existing batteries with a long service life and excessive lithium supplemented in the prior art, the lithium ion battery of the present application does not require excessive graphite and has lithium stored in a cathode, thereby obtaining a higher energy density.
3. The battery is subjected to continuous capacity loss detection in subsequent charge-discharge cycles, and is activated at an appropriate time, which effectively supplement the active lithium ions consumed due to side reactions during the normal charge-discharge process, such that the battery is recovered to the initial capacity thereof at least once, preferably a plurality of times, thereby obtaining a lithium ion secondary battery with no degradation (or minimal degradation) in terms of cycling performance and storage performance for a long time.
4. By means of later battery detection and capacity activation, a later maintenance mode for capacity recovery of the lithium ion battery is developed, user experience is improved, a battery service life is prolonged, and a product value is improved.

FIG. 3 shows a battery management system (BMS) S300 according to an implementation of the present application. The system includes a monitoring unit S310, a control unit S320, and a charging unit S330. In addition, FIG. 3 further shows a battery S340. The battery S340 is not a part of the BMS (S300), but is a target object upon which the BMS directly acts.

Specifically, the battery management system S300 includes:

S310, the monitoring unit.

The monitoring unit is connected to the battery S340 external to the BMS by means of one or more sensors, and is configured to obtain one or more state-of-health values of the battery S340. Moreover, the monitoring unit S310 is connected to the control unit S320, and transmits the measured state-of-health value to the control unit S320.

S320, the control unit.

The control unit may be various scales of processors, where preloaded engineering software and a pre-input parameter may be included, and information about a first threshold and a second threshold can be included in the control unit S320 in a manual input or automatic generation manner, and a normal charging voltage output by an automatic regulation charging unit and more command information of one or more activation voltages may further be included. The control unit is connected to the charging unit, and can control, based on the state-of-health value measured by the monitoring unit, the sending of the command information to the charging unit, to instruct the charging unit to apply a charging voltage or an activation voltage to the battery.

S330, the charging unit.

The charging unit is connected to a positive electrode and a negative electrode of the battery, and applies the normal charging voltage or the activation voltage to the lithium ion battery according to an instruction issued by the control unit S320.

By means of automatic operations of the above units, a more efficient and finely designed process of lithium supplement for the battery can be implemented, thereby maintaining the battery at an ideal active state, and maximizing the service life of the battery.

The BMS system of the present application may be provided in a charging apparatus as desired, such as in a charging station or a charging pile, or may be provided in a power consuming device using a secondary lithium ion battery, such as in an electric vehicle.

### Electrical apparatus

In an implementation of the present application, the electrical apparatus of the present application includes at least one of a secondary battery, a battery module, and a battery pack of the present application. The secondary battery, the battery module, or the battery pack may be used as a power supply of the electrical apparatus, or an energy storage unit of the electrical apparatus. The electrical apparatus includes, but is not limited to, a mobile digital apparatus (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship and satellite, an energy storage system, etc.

As another example, the electrical apparatus may be a mobile phone, a tablet computer, a laptop computer, etc. The electrical apparatus is generally required to be thin and light, and may use the secondary battery as a power supply.

According to a preferred implementation of the present application, the lithium ion battery (the secondary battery) of the present application is used in an electric vehicle or a hybrid vehicle. In the vehicle, a battery capacity monitoring apparatus is provided, which monitors the capacity of the battery in the vehicle in a continuous or intermittent manner, and sends a signal when a specific proportion (e.g., over 30%, or over 40%, or over 50%, or over 60%, or over 70%) of the battery capacity drops to the threshold according to a preset value, so as to notify a user of activity recovery of the battery in a 4S store.

According to another implementation of the present application, a detection apparatus is provided in a charging pile or a charging station, which simultaneously monitors capacities of various batteries in the vehicle every time normal charging is performed, and sends a signal when a specific proportion (e.g., over 30%, or over 40%, or over 50%, or over 60%, or over 70%) of the battery capacity drops to the threshold according to a preset setting, so as to notify a user of activity recovery of the battery in a 4S store.

According to another implementation of the present application, a detection apparatus is provided in a charging pile or a charging station, which simultaneously monitors capacities of various batteries in the vehicle every time normal charging is performed, and sends a signal when a specific proportion (e.g., over 30%, or over 40%, or over 50%, or over 60%, or over 70%) of the battery capacity drops to the threshold according to a preset setting, so as to notify a consumer to apply, in an automatic or manual manner by means of the charging pile or the charging station, the activation voltage to the battery for activity recovery of the battery.

According to a preferred implementation of the present application, a normal charging voltage used during a normal charge/discharge process is 1.6 to 4.5 volts, for example, 2.0-3.65 volts, and the activation voltage is higher than the normal charging voltage and ≤ 5.5 V. According to some implementations of the present application, the normal charging voltage used during the normal charge/discharge process is 1.6-4.5 volts, which is, for example, any one of the following voltage numerical values, or may be within a voltage numerical range obtained by combining any two of the following numerical values: 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, and 4.5. According to some implementations of the present application, the activation voltage is higher than the normal charging voltage and ≤ 5.5 volts, such as 3.2 volts ≤ the activation voltage ≤ 5.5 volts, or 3.65 volts ≤ the activation voltage ≤ 5.0 volts. The activation voltage is, for example, any one of the following voltage numerical values, or may be within a voltage numerical range obtained by combining any two of the following numerical values: 3.2, 3.3, 3.4, 3.5, 3.6, 3.65, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, and 5.5 volts.

According to a preferred implementation of the present application, the normal charging/discharging and the application of the voltage for activity recovery are performed using the same apparatus (charging apparatus, for example, a charging pile or a charging station). According to another preferred implementation of the present application, the normal charging/discharging and the application of the voltage for activity recovery are performed using different apparatuses. For example, the normal charging/discharging is performed using a charging pile or a charging station, and the recovery of the activity of the battery needs to be performed using a special device in a 4S store.

An embodiment of the present application provides a method for recovering activity of a secondary lithium ion battery, the method including: obtaining a battery state-of-health value of a battery during a charging process; when the battery state-of-health value is less than or equal to a preset threshold, applying an activation voltage to the battery, such that lithium ions at a lithium supplement agent comprised in the battery are released to an electrolyte solution, where the activation voltage is higher than a normal charging voltage of the battery; and when the battery state-of-health value increases to be greater than or equal to a second preset threshold, recovering from the activation voltage to the normal charging voltage.

Another embodiment of the present application provides a battery activation method. In the embodiment, after a first charge-discharge cycle, an operation of applying an activation voltage is not performed, and subsequent second to Nth charge-discharge operations are performed directly, where N is an integer from 2 to 500,000, and the second to Nth charge-discharge operations are performed at the normal charging voltage; during the second to Nth charge-discharge operations, a real-time capacity Cᵣₑₐₗ₋ₜᵢₘₑ of the battery gradually decreases, and each time Cᵣₑₐₗ₋ₜᵢₘₑ is lower than C₀ × 80%, an activation voltage V_{activation} is applied to the battery for activity recovery; and when the battery state-of-health value increases to be greater than or equal to a second preset threshold, the activation voltage is recovered to the normal charging voltage, and the charge-discharge operations are continued. In addition, the operation of applying the activation voltage V_{activation} to the battery for activity recovery is performed more than once, and starting from the second time, the activation voltage for each activity recovery is increased relative to the activation voltage for a previous activity recovery, where the activation voltage is increased at a fixed extent each time or at a varying extent each time.

Another embodiment of the present application provides a lithium ion secondary battery, the lithium ion secondary battery including a lithium supplement agent in a positive electrode thereof, where the lithium supplement agent can perform activity recovery on the battery at an activation voltage.

Another embodiment of the present application provides a battery management system, the battery management system including: a monitoring unit, a charging unit, and a control unit that are connected to each other, where the monitoring unit is configured to monitor one or more state-of-health values of a lithium ion battery; the charging unit can apply a normal charging voltage or an activation voltage to a battery, the normal charging voltage being lower than the activation voltage; and the control unit generates a charging signal or an activation signal based on the state-of-health values measured by the monitoring unit, such that the charging unit applies the normal charging voltage to the battery upon receiving the charging signal, and the charging unit applies the activation voltage to the battery upon receiving the activation signal.

Another embodiment of the present application further provides a readable storage medium for storing a computer program, where the computer program is used to perform the above battery activation method. For example, the computer program may be a battery management system (BMS) program for use in conjunction with the battery management system (BMS) of the present application.

The embodiments described above are merely used for illustrating, rather than limiting, the technical solutions of the present application. Although the present application has been illustrated in detail with reference to the foregoing embodiments, it should be understood by those of ordinary skill in the art that the technical solutions described in the foregoing embodiments may still be modified, or some of the technical features thereof may be equivalently substituted. In addition, the present application further includes the technical solutions obtained by combining the above-described technical features with each other, and the technical solutions obtained by combining the above-described embodiments and implementations with each other, as long as the technical solutions are included in the scope defined by the claims of the present invention.

## Claims

1. A method for recovering activity of a battery, the method comprising:
obtaining a battery state-of-health value of a battery during a charging process;
when the battery state-of-health value is less than or equal to a first preset threshold, applying an activation voltage to the battery, such that lithium ions at a lithium supplement agent comprised in the battery are released to an electrolyte solution, wherein the activation voltage is higher than a normal charging voltage of the battery; and
when the battery state-of-health value increases to be greater than or equal to a second preset threshold, stopping the application of the activation voltage, and continuing a normal charge-discharge cycle.

2. The method of claim 1, **characterized in that** the lithium supplement agent is comprised in a positive electrode of the battery.

3. The method of claim 1, **characterized in that** the battery state-of-health value is selected from at least one of the following parameters: a battery capacity, a remaining capacity, an energy density, a power density, an electromotive force, an open-circuit voltage, an operating voltage, an end-of-discharge voltage, and an operating current.

4. The method of any of claims 1 to 3, **characterized in that** the battery state-of-health value is a real-time capacity Cᵣₑₐₗ₋ₜᵢₘₑ of the battery, an initial capacity of the battery in a first charge-discharge cycle is C₀, and the threshold is C₀ × 80%, wherein when Cᵣₑₐₗ₋ₜᵢₘₑ decreases to be lower than or equal to C₀ × 80%, the activation voltage is applied to the battery; after the first charge-discharge cycle, an operation of applying the activation voltage is not performed, and subsequent second to N^{th} charge-discharge operations are performed directly, wherein N is an integer from 2 to 500,000, and the second to N^{th} charge-discharge operations are performed at the normal charging voltage; during the second to N^{th} charge-discharge operations, the real-time capacity Cᵣₑₐₗ₋ₜᵢₘₑ of the battery gradually decreases, and each time Cᵣₑₐₗ₋ₜᵢₘₑ is lower than C₀ × 80%, the activation voltage V_{activation} is applied to the battery for activity recovery; and when the battery state-of-health value increases to be greater than or equal to the second preset threshold, the activation voltage is recovered to the normal charging voltage, and the charge-discharge operations are continued.

5. The method of claim 4, **characterized in that** the operation of applying the activation voltage V_{activation} to the battery for activity recovery is performed more than once, and starting from the second time, the activation voltage for each activity recovery is increased relative to the activation voltage for a previous activity recovery, wherein the activation voltage is increased at a fixed extent each time or at a varying extent each time.

6. The method of any of claims 1 to 5, **characterized in that** the operations of applying the normal charging voltage and the activation voltage are performed using a same charging device.

7. A lithium ion secondary battery, comprising a lithium supplement agent, wherein the lithium ion secondary battery performs a charge-discharge operation at a normal charging voltage, and the lithium supplement agent can perform activity recovery on the battery at an activation voltage, the activation voltage being higher than the normal charging voltage.

8. A battery management system (S300) (BMS), comprising:
a monitoring unit (S310), a charging unit (S330), and a control unit (S320) that are connected to each other,
wherein the monitoring unit (S310) is configured to monitor one or more state-of-health values of a lithium ion battery;
the charging unit (S330) can apply a normal charging voltage or an activation voltage to a battery, the normal charging voltage being lower than the activation voltage; and
the control unit (S320) generates a charging signal or an activation signal based on the state-of-health values measured by the monitoring unit (S310), such that
the charging unit (S330) applies the normal charging voltage to the battery upon receiving the charging signal, and the charging unit (S330) applies the activation voltage to the battery upon receiving the activation signal.

9. A readable storage medium for storing a computer program, wherein the computer program is used to perform a battery activation method of any of claims 1 to 6.

10. The readable storage medium of claim 9, **characterized in that** the computer program is a battery management system program.
